# EUROPEAN PATENT APPLICATION

(11) **EP 2 993 444 A1**
(43) Date of publication of application: **09.03.2016**
(21) Application number: 14791270.3
(22) Date of filing: 07.04.2014
(51) Int. Cl.: G01C 21/26, G01C 21/34, G07C 5/00, G08G 1/00

(54) **INFORMATION PROVISION DEVICE, INFORMATION PROVISION METHOD, AND INFORMATION PROVISION PROGRAM**

(30) Priority: 30.04.2013 JP 2013095628
(71) Applicant: Panasonic Intellectual Property Management Co., Ltd., Osaka-shi, Osaka 540-6207 (JP)
(72) Inventor: NEGISHI, Tatsuyuki, Osaka-shi, Osaka 540-6207 (JP)
(74) Representative: Grünecker Patent- und Rechtsanwälte PartG mbB
(86) International application number: PCT/JP2014/001989
(87) International publication number: WO 2014/178168

(57) **Abstract**

An information provision device that can provide useful information for the movement management of a moving mobile body. This information provision device has a movement trail processing unit for acquiring, from movement trail data for a reference mobile body that arrived at a prescribed destination by a prescribed time, a passing time at which the reference mobile body passed a prescribed waypoint and a movement trail display unit for displaying a diagram (520) indicating the intersection (movement trail data area (535)) between the waypoint and the passing time in a two-dimensional space having a time axis and space axis as the axes thereof.

## Description

### Technical Field

The present invention relates to an information providing apparatus, an information providing method and an information providing program for providing information useful for dynamic management of mobile subjects.

### Background Art

Among means of transportation, some means of transportation are provided with a previously determined departure point and destination, and for these means of transportations, a traveling time on a route from the departure point to the destination (hereinafter referred to as "whole route") is required to fall within a predetermined range. Examples of typical means of transportation include public means of transportation such as trains and buses, and distribution vehicles (trucks or the like).

Patent Literature (hereinafter, referred to as "PTL") 1, for example, discloses a technique of providing information useful for operation management of such means of transportation.

The technique disclosed in PTL 1 (hereinafter referred to as "related art") calculates, from past required time data, an estimated required time which is a required time necessary for a vehicle to travel a whole route, and also calculates an estimation error which is a variation in the required time according to a road situation or the like. The related art displays an estimated arrival time zone at a destination of the vehicle using text such as "13:00, -10 minutes, +30 minutes" or an image of an analog clock based on the departure time, estimated required time and estimation error.

Such a related art can provide the driver of the vehicle or an administrator who manages operation of the vehicle with information as a guideline as to whether the vehicle arrives at the destination at a scheduled time without delay.

### Citation List

### Patent Literature

PTL 1
Japanese Patent Application Laid-Open No. 2004-69609

### Summary of Invention

### Technical Problem

In an attempt to perform operation management so that the arrival time at the destination falls within a predetermined range, it is important to perform operation management of the actual traveling vehicle, such as a guideline of the driving speed or determination of the length of break time. Therefore, it is desirable to provide information useful for operation management of the actual traveling vehicle such as whether or not the vehicle can arrive in time even when the vehicle is driven at lower speed, or whether the vehicle can arrive in time even when the vehicle stops on the way to do some work, or how much break time is available on the way to the destination.

Furthermore, the departure point and destination may be previously determined for various mobile subjects other than the aforementioned vehicles, such as people, ships, or aircraft. In an attempt to perform dynamic management on such a mobile subject so that the arrival time at the destination falls within a predetermined range, it is desirable to provide information useful for dynamic management of the moving mobile subject likewise.

However, the above-described related art can only indicate whether the arrival time is likely to fall within a predetermined range and cannot provide information useful for dynamic management of the moving mobile subject.

An object of the present invention is to provide an information providing apparatus, an information providing method and an information providing program capable of providing information useful for dynamic management of moving mobile subjects.

### Solution to Problem

An information providing apparatus of the present disclosure includes: a movement trail processing section that acquires a passing time from a piece of movement trail data of a reference mobile subject which is a mobile subject that arrives at a predetermined destination at a predetermined time without delay, the passing time being a time at which the reference mobile subject passes through a predetermined transit point; and a movement trail display section that displays a diagram showing a point of intersection between the transit point and the passing time in a two-dimensional space having a time axis and a spatial axis as axes of the diagram.

An information providing method of the present disclosure includes: acquiring a passing time from a piece of movement trail data of a reference mobile subject which is a mobile subject that arrives at a predetermined destination at a predetermined time without delay, the passing time being a time at which the reference mobile subject passes through a predetermined transit point; and displaying a diagram indicating a point of intersection between the transit point and the passing time in a two-dimensional space having a time axis and a spatial axis as axes of the diagram.

An information providing program of the present disclosure is a program for causing a computer to execute processing including: acquiring a passing time from a piece of movement trail data of a reference mobile subject which is a mobile subject that arrives at a predetermined destination at a predetermined time without delay, the passing time being a time at which the reference mobile subject passes through a predetermined transit point; and displaying a diagram indicating a point of intersection between the transit point and the passing time in a two-dimensional space having a time axis and a spatial axis as axes of the diagram.

### Advantageous Effects of Invention

According to the present disclosure, it is possible to provide information useful for dynamic management of moving mobile subjects.

### Brief Description of Drawings

FIG. 1 is a block diagram illustrating an exemplary configuration of an information providing apparatus according to Embodiment 1 of the present invention;
FIG. 2 is a flowchart illustrating an example of operation of the information providing apparatus according to Embodiment 1 of the present invention;
FIG. 3 is a schematic view illustrating an example of a plurality of pieces of movement trail data according to present Embodiment 1;
FIG. 4 is a diagram illustrating an exemplary diagram according to present Embodiment 1;
FIG. 5 is a diagram illustrating a variation of the configuration of the information providing apparatus according to present Embodiment 1;
FIG. 6 is a diagram illustrating a variation of the diagram according to present Embodiment 1;
FIG. 7 is a block diagram illustrating an exemplary configuration of an information providing system according to Embodiment 2 of the present invention;
FIG. 8 is a diagram illustrating an exemplary diagram according to Embodiment 2; and
FIG. 9 is a block diagram illustrating an exemplary configuration of an information providing system according to Embodiment 3 of the present invention.

### Description of Embodiments

Hereinafter, embodiments of the present invention will be described in detail with reference to the accompanying drawings.

### <Embodiment 1>

Embodiment 1 of the present invention is an example of a specific mode of the present invention when the present invention is applied to an apparatus that presents information to a driver of a distribution vehicle or an administrator who manages operation of the vehicle.

### (Description of Configuration of Information Providing Apparatus)

First, a configuration of an information providing apparatus according to Embodiment 1 will be described.

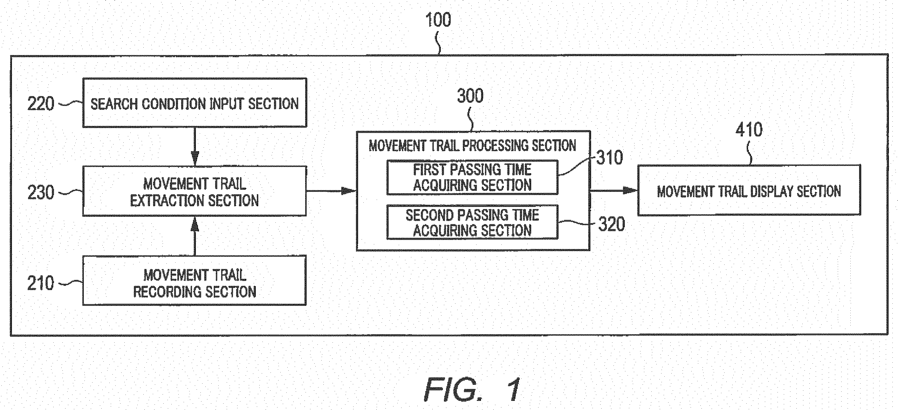

FIG. 1 is a block diagram illustrating an exemplary configuration of an information providing apparatus according to Embodiment 1 of the present invention.

In FIG. 1, information providing apparatus 100 includes movement trail recording section 210, search condition input section 220, movement trail extraction section 230, movement trail processing section 300, and movement trail display section 410.

### (Description of Movement Trail Recording Section)

Movement trail recording section 210 stores in advance a plurality of pieces of movement trail data collected by various systems. Here, the movement trail data is data that records how traveling vehicles have moved in the past.

The movement trail data includes at least information indicating a traveling route of a vehicle, information indicating a departure time of the vehicle, information indicating passing times of main transit points of the vehicle and information indicating an arrival time of the vehicle, for example. Here, the departure time is the time at which the vehicle leaves the departure point. The passing time is the time at which the vehicle passes through a transit point. The arrival time is a time at which the vehicle arrives at a destination.

As the movement trail data, it is possible to adopt, for example, information that records position information and time information of the vehicle recorded at specific timing such as probe information. As the movement trail data, it is possible to adopt information that records identification information and time information of the vehicle every time the vehicle arrives at a specific place, such as information obtained in a bus location system or a train operation management system. The movement trail data may be linked to various kinds of information such as vehicle identification information and identification information of the driver of the vehicle.

Note that movement trail recording section 210 may be a recording region in a recording medium that makes up information providing apparatus 100 or a recording region in a recording medium provided on a network (not shown) accessible to information providing apparatus 100.

### (Description of Search Condition Input Section)

Search condition input section 220 inputs conditions of movement trail data used by movement trail processing section 300, which will be described later, and outputs the inputted conditions to a movement trail extraction section.

Search condition input section 220 receives search conditions from the user of the actual vehicle via an input interface such as a touch panel, for example. Here, the actual vehicle refers to a vehicle that starts traveling. The user refers to the driver of the actual vehicle or an administrator who manages operation of the actual vehicle. The search condition refers to a condition under which the actual vehicle travels.

The search condition includes, for example, route information such as a departure point, transit points and destination. The search condition also includes time information such as a departure time zone and an arrival time zone. Here, the departure time zone refers to a time zone of the departure time. The arrival time zone refers to a desired time zone of the arrival time. The search condition includes, for example, vehicle identification information and driver identification information.

Note that search condition input section 220 need not always receive input of the search condition from the user. That is, search condition input section 220 may output a search condition registered in advance to the movement trail extraction section. Search condition input section 220 may receive selection operations with respect to a plurality of search conditions registered in advance from the user and output a selected search condition to the movement trail extraction section.

### (Description of Movement Trail Extraction Section)

Movement trail extraction section 230 extracts a piece of movement trail data that satisfies the search condition inputted from search condition input section 220 from among a plurality of pieces of movement trail data stored in movement trail recording section 210. Movement trail extraction section 230 then outputs one or a plurality of pieces of movement trail data that satisfy the inputted search condition to movement trail processing section 300.

For example, suppose that the actual vehicle plans traveling so as to leave ABC Town between 10:00 to 10:15 on Friday and arrive at DEF Town between 11:45 to 12:15. In this case, the search condition is: the departure point is ABC Town, the destination is DEF Town, the day of the week is Friday, the departure time is 10:00 to 10:15, and the arrival time is 11:45 to 12:15. Movement trail extraction section 230 extracts such a piece of movement trail data that satisfies the search condition. The piece of movement trail data to be extracted is, for example, a piece of movement trail data of a different vehicle that left ABC Town at 10:05 last Friday and arrived at DEF Town at 12:00.

The following description assumes that the following search condition is inputted: the departure time from a predetermined departure point is included in a predetermined departure time zone (first time zone) and the arrival time at a predetermined destination is included in a predetermined arrival time zone (second time zone).

### (Description of Movement Trail Processing Section)

Movement trail processing section 300 acquires a passing time that is the time at which a reference vehicle (reference mobile subject) passes through a predetermined transit point from movement trail data of the reference vehicle, which is the vehicle (mobile subject) that arrives at a predetermined destination at a predetermined time without delay. Note that movement trail processing section 300 uses one or a plurality of pieces of movement trail data inputted from movement trail extraction section 230, that is, a piece of movement trail data that satisfies the aforementioned search condition.

More specifically, movement trail processing section 300 includes first passing time acquiring section 310 and second passing time acquiring section 320.

### (Description of First Passing Time Acquiring Section)

When there are a plurality of pieces of movement trail data that satisfy the above-described search condition, first passing time acquiring section 310 acquires a first departure time, a first passing time and a first arrival time from the plurality of pieces of movement trail data. First passing time acquiring section 310 associates, with each other, the acquired first departure time, first passing time, and first arrival time with information indicating the departure point, transit point and place of arrival on the corresponding route, and outputs the information to movement trail display section 410. Note that the departure point, transit point, and place of arrival will be generically referred to as "point" in the following description as appropriate.

Here, the first departure time is a predetermined time included in the time zone where departure times are distributed in the above-described plurality of pieces of movement trail data, and is a time earlier than a second departure time which will be described later. The first passing time is a predetermined time included in the time zone where passing times are distributed in the above-described plurality of pieces of movement trail data, and is a time earlier than a second passing time which will be described later. The first arrival time is a predetermined time included in the time zone where arrival times are distributed in the above-described plurality of pieces of movement trail data, and is a time earlier than a second arrival time which will be described later.

Note that the present embodiment assumes that the first departure time, first passing time, and first arrival time are earliest times at which the reference vehicle is located at the corresponding points. That is, first passing time acquiring section 310 acquires, for each point on the route, the time at which the vehicle located at the point at the earliest time from the plurality of pieces of movement trail data.

### (Description of Second Passing Time Acquiring Section)

When there are a plurality of pieces of movement trail data that satisfy the above-described search condition, second passing time acquiring section 320 acquires a second departure time, a second passing time, and a second arrival time from the plurality of pieces of movement trail data. Second passing time acquiring section 320 associates the acquired second departure time, second passing time, and second arrival time with information indicating the corresponding points and outputs the information to movement trail display section 410.

Here , the second departure time is the time included in the time zone where departure times are distributed and is a relatively later time in the time zone (time later than the first departure time) in the above-described plurality of pieces of movement trail data. The second passing time is a time included in the time zone where passing times are distributed and is a relatively later time in the time zone (time later than the first passing time) in the above-described plurality of pieces of movement trail data. The second arrival time is a time included in the time zone where arrival times are distributed in the above-described plurality of pieces of movement trail data and is a relatively later time in the time zone (time later than the first arrival time).

Note that the present embodiment assumes that the second departure time, the second passing time, and the second arrival time are each the latest time at which the reference vehicle is located at the corresponding point. That is, first passing time acquiring section 310 acquires, for each point on the route, the time at which the vehicle is located at the point at the latest time from the plurality of pieces of movement trail data.

Suppose that transit points where the first passing time and second passing time are acquired (hereinafter referred to as "predetermined transit point") are predetermined. The predetermined transit points preferably include a point where a traveling environment changes on the way due to a break or the like. Examples of such points include an interchange, service area and roadside station.

However, there may be cases where passing times corresponding to the predetermined transit points are not included in the movement trail data. The reason is as follows. For example, when the movement trail data is made up of probe information, the probe information is data that discretely records position information and time information. However, position information recorded in the probe information may not match the predetermined transit points.

In such a case, first passing time acquiring section 310 and second passing time acquiring section 320 may estimate passing times of the predetermined transit points based on time information on two points: points before and after each predetermined transit point or a plurality of points including each predetermined transit point. This estimation may be done by internally dividing passing times at two points before and after each predetermined transit point or using passing times at a plurality of points and an estimation function.

### (Description of Movement Trail Display Section)

Movement trail display section 410 generates a diagram based on the inputted first departure time, first passing time, first arrival time, second departure time, second passing time, and second arrival time. Movement trail display section 410 then causes a display (not shown) to display the generated diagram. Examples of such a display include a dashboard of the vehicle and a liquid crystal display for displaying an onboard meter disposed on a display of the management center. The diagram generated is an image showing points of intersection between transit points and passing times in a two-dimensional space having the time axis and the spatial axis as the axes of the diagram.

In the present embodiment, the diagram includes information indicating the departure time, passing time, and arrival time along the time axis, and information indicating the predetermined departure point, predetermined transit points, and predetermined destination along the spatial axis. Furthermore, the diagram shows line segments connecting a point of intersection between the predetermined departure point and the departure time of the reference vehicle, a point of intersection between predetermined transit points and the passing times of the reference vehicle and a point of intersection between the predetermined destination and the arrival time of the reference vehicle. More specifically, the diagram shows an earliest passing time line (first line segment) and a latest passing time line (second line segment).

The earliest passing time line here refers to line segments connecting a point of intersection between the predetermined departure point and the above-described first departure time, a point of intersection between the predetermined transit points and the above-described first passing times, and a point of intersection between the predetermined destination and the above-described first departure time. That is, the earliest passing time line indicates the earliest passing time at each transit point (including transit points other than the predetermined transit point) in the past traveling record of the vehicle that left a predetermined departure point in a predetermined departure time zone and arrived at a predetermined destination in a predetermined arrival time zone.

On the other hand, the latest passing time line refers to line segments connecting a point of intersection between the predetermined departure point and the above-described second departure time, a point of intersection between the predetermined transit points and the above-described second passing times, and a point of intersection between the predetermined destination and the above-described second departure time. That is, the latest passing time line indicates the latest passing time at each transit point (including transit points other than the predetermined transit point) in the past traveling record of the vehicle that left a predetermined departure point in a predetermined departure time zone and arrived at a predetermined destination in a predetermined arrival time zone.

That is, a time and spatial region enclosed by the earliest passing time line and the latest passing time line is a region where movement trail data that satisfies the search condition is distributed. Hereinafter, such a time and spatial region is referred to as a "movement trail data region." The movement trail data region is a traveling state that should be kept by the actual vehicle when the actual vehicle is to travel so as to satisfy the search condition.

Information providing apparatus 100 that has the above-described configuration assumes the form of an electronic control unit (ECU) disposed in the dashboard of the vehicle or an information terminal of the management center, for example. That is, information providing apparatus 100 includes a central processing unit (CPU), a storage medium such as a read only memory (ROM) that stores a control program and a working memory such as a random access memory (RAM), which are not shown. In this case, functions of the above-described components are implemented by the CPU executing the control program.

### (Description of Operation of Information Providing Apparatus)

Next, an operation of information providing apparatus 100 will be described.

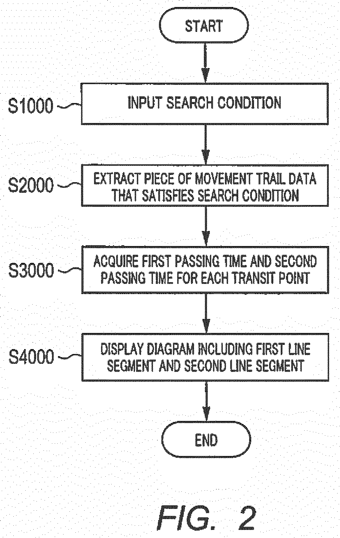

FIG. 2 is a flowchart illustrating an example of the operation of information providing apparatus 100. Information providing apparatus 100, for example, receives a user's operation every time the actual vehicle starts traveling and performs the operation which will be described below.

First, in step S1000, search condition input section 220 inputs a search condition.

In step S2000, movement trail extraction section 230 extracts a piece of movement trail data that satisfies the inputted search condition from movement trail recording section 210.

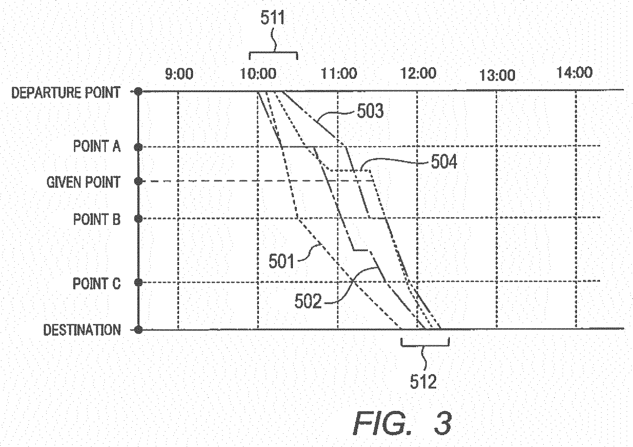

FIG. 3 is a schematic view illustrating an example of a plurality of pieces of movement trail data extracted. Here, like a diagram, pieces of movement trail data are shown in a two-dimensional space having the time axis and the spatial axis as the axes of the diagram. In FIG 3, the vertical axis represents the spatial axis and the horizontal axis represents the time axis.

Here, suppose that a predetermined departure point, a departure time zone of 10:00 to 10:15, a predetermined destination, and an arrival time zone of 11:45 to 12:15 are inputted as search conditions. Suppose that the above-described predetermined transit points include point A, point B, and point C in ascending order of closeness to the predetermined departure point and are points located at an interval of 1 km, for example. The vertical axis corresponds to the distance from the departure point (or the distance to the destination).

As shown in FIG. 3, first to fourth pieces of movement trail data 501 to 504 (shown by broken line, one-dot dashed line, two-dot dashed line, and dotted line respectively) are extracted, for example. First to fourth pieces of movement trail data 501 to 504 are pieces of movement trail data of reference vehicles that left a predetermined departure point in departure time zone 511, which is 10:00 to 10:15 and arrived at a predetermined destination in arrival time zone 512, which is 11:45 to 12:15.

In step S3000 of FIG. 2, movement trail processing section 300 acquires the first passing time and the second passing time for each predetermined transit point.

For example, at a given point between point A and point B, passing time 10:25 indicated by first piece of movement trail data 501 is the earliest and passing time 11:30 indicated by fourth piece of movement trail data 504 is the latest. Therefore, movement trail processing section 300 acquires 10:25 as the first passing time and 11:30 as the second passing time at such a given point. Movement trail processing section 300 likewise acquires first passing times and second passing times for all predetermined transit points and given points (e.g., points located at an interval of 100 m) between respective transit points.

In step S4000 of FIG. 2, movement trail display section 410 generates and displays a diagram including an earliest passing time line (first line segment) and a latest passing time line (second line segment). In other words, movement trail display section 410 draws the diagram on a display surface of the display.

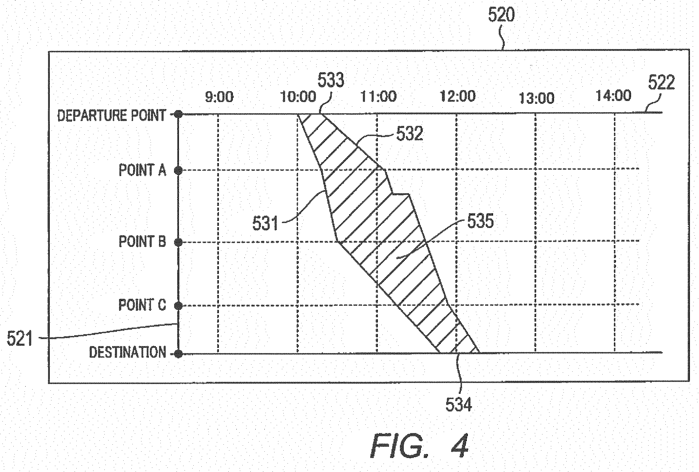

FIG. 4 is a diagram illustrating an example of the diagram displayed by movement trail display section 410.

As shown in FIG. 4, diagram 520 is a two-dimensional space formed by vertical axis 521, which is the spatial axis, and horizontal axis 522, which is the time axis. Typical points are clearly shown on vertical axis 521. Examples of the typical point (e.g., point B) include a roadside station and a convenience store. Typical times are clearly shown on horizontal axis 522.

Diagram 520 shows earliest passing time line 531 and latest passing time line 532. Diagram 520 shows movement trail data region 535 enclosed by, for example, earliest passing time line 531, latest passing time line 532, line segment 533 indicating a time zone where departure times are distributed and line segment 534 indicating a time zone where arrival times arc distributed, using hatching, for example.

Earliest passing time line 531 is a line joining the earliest passing times at respective transit points from the departure point to the destination. Latest passing time line 532 is a line joining the latest passing times at respective transit points from the departure point to the destination. Movement trail data region 535 is a region always containing a piece of movement trail data that satisfies the search condition.

### (Effects of Embodiment 1)

Through the above-described configuration and operation, information providing apparatus 100 can display a diagram showing points of intersection between predetermined transit points and passing times at which a reference vehicle passed through the predetermined transit points, in a two-dimensional space having the time axis and the spatial axis as the axes of the diagram.

Such information providing apparatus 100 can display approximately within which time zone the vehicle should pass each transit point and by approximately what time the vehicle should leave each transit point in an intuitively easy-to-understand way to ensure that the arrival time at the destination falls within a predetermined range.

For example, by looking at diagram 520 shown in FIG. 4, the user can know that it is possible to arrive at the destination within a target predetermined arrival time zone if the vehicle passes through point A in the time zone of 10:20 to 11:05 and passes through point B in the time zone of 10:30 to 11:35. This allows the user to set not only the arrival time at the destination but also target passing times at the respective points between the departure point and the destination.

Furthermore, for example, drivers of distribution vehicles and long-distance buses often need to take a break. On the other hand, lateral widths at the respective points of the movement trail data region of diagram 520 shown in FIG. 4 indicate maximum-allowable staying time periods at the respective points. Therefore, when the user takes a break or the like between the departure point and the destination, the user can figure out, by only looking at diagram 520, at which point the user should take a break in order for the user to travel efficiently.

More specifically, it is observed from diagram 520 that while an allowable passage time period at point A is 50 minutes, an allowable passage time zone at point B is 65 minutes. The user can understand that the user is more likely to be able to take a longer break at point B than at point A. That is, the user can determine where to take a break so as to minimize the risk of failing to arrive in time within the target arrival time zone.

That is, information providing apparatus 100 can provide information as to whether or not the user can arrive in time even when driving at low speed, can arrive in time even when the user stops the vehicle to do some work on the way, and/or how much break time is available on the way to the destination.

In addition, in the case of a distribution vehicle, for example, if the vehicle arrives at the destination too early, the driver may have to wait until the unloading time or there may be no parking space for standby. In such cases, information providing apparatus 100 can provide information, for example, as to whether or not the vehicle arrives too early when driven at higher speed and/or approximately how much a break time the driver should take on the way.

Therefore, information providing apparatus 100 can provide information useful for operation management of the actual traveling vehicle. This allows the user to make an efficient traveling plan.

### (Variations of Embodiment 1)

Note that the first departure time, first passing time, and first arrival time have been assumed to be the earliest times at which a reference vehicle positioned at the corresponding points in the case described above, but the present invention is not limited to this case. For example, the first passing time may be later than the earliest time by a predetermined time (e.g., several minutes) at which the reference vehicle passed through the corresponding transit point.

The second departure time, second passing time, and second arrival time have been assumed to be the latest times at which the reference vehicle is located at the corresponding points, but the present invention is not limited to this. For example, the second passing time may be earlier than the latest time by a predetermined time (e.g., several minutes) at which the reference vehicle passed through the corresponding transit point.

The movement trail data may include movement trail data of a vehicle that has done a special way of traveling or movement trail data of a vehicle that has traveled in a special environment, that is, movement trail data showing a traveling state which is hard to reproduce. The presence of such movement trail data may cause the above-described earliest time at each point to be unduly earlier or cause the above-described latest time at each point to be unduly later.

Moreover, there may be cases during traveling of an actual vehicle where a passing time at each point is late compared to normal traveling due to waiting for a traffic light, time required to get permission at the entrance of the premises of a plant or the like.

Thus, acquiring the above-described time, then generating, and displaying a diagram in a direction in which a movable time zone becomes narrower can further reduce the risk of not arriving at the target arrival time zone in time. For example, if the above-described time required to get permission at the entrance of a plant is known in advance, a time obtained by adding the time to the above-described earliest time may be set to be the first passing time and a time obtained by subtracting the time from the above-described latest time may be set to be the second passing time.

Information providing apparatus 100 may divide each piece of movement trail data into a plurality of sections and acquire first and second times based on the unit of data for each section.

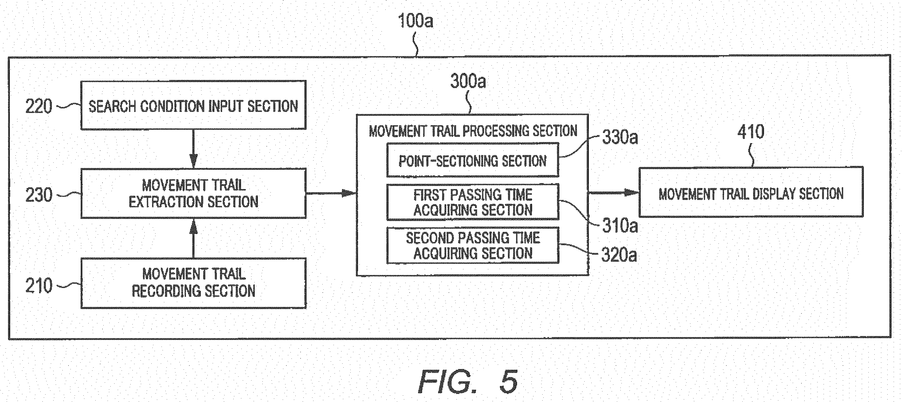

FIG. 5 is a diagram illustrating an exemplary configuration of the information providing apparatus in such a case (denoted by reference numeral "100a"), which corresponds to FIG. 1. Components identical to those in FIG. 1 will be assigned identical reference numerals and description thereof will be omitted.

In FIG. 5, information providing apparatus 100a includes movement trail processing section 300a which is different from movement trail processing section 300. Movement trail processing section 300a includes point-sectioning section 330a, first passing time acquiring section 310a, and second passing time acquiring section 320a.

When there are a plurality of pieces of movement trail data that satisfy the above-described search condition, point-sectioning section 330a sections the respective pieces of movement trail data into pieces of divided trail data sectioned according to a plurality of sections obtained by sectioning the whole route. Point-sectioning section 330a then outputs the plurality of pieces of divided trail data to first passing time acquiring section 310a and second passing time acquiring section 320a.

First passing time acquiring section 310a identifies, for each section, a piece of divided trail data whose average of times at which a reference vehicle is positioned (hereinafter referred to as "average time") is the earliest time. First passing time acquiring section 310a then outputs a line segment connecting pieces of divided trail data identified for the respective sections over the whole route to movement trail display section 410 as the earliest passing time line (first line segment).

Second passing time acquiring section 320a identifies, for each section, a piece of divided trail data whose average time is the latest time. Second passing time acquiring section 320a then outputs a line segment connecting pieces of divided trail data identified for the respective sections over the whole route to movement trail display section 410 as the latest passing time line (second line segment).

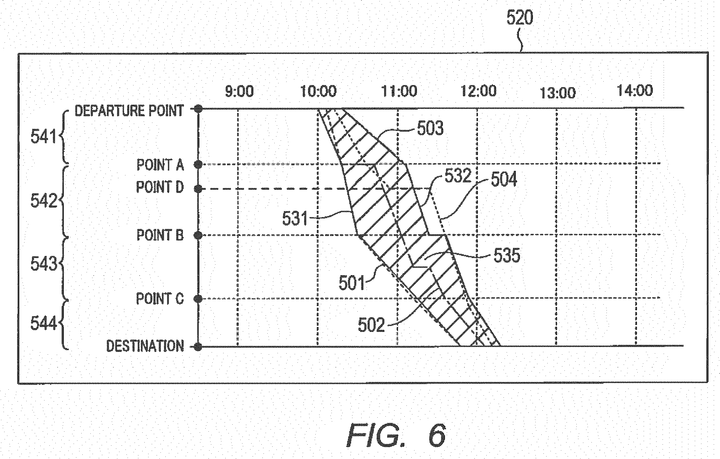

FIG. 6 is a diagram illustrating an example of a diagram displayed by movement trail display section 410 of information providing apparatus 100a, which corresponds to FIG 4. Components identical to those in FIG. 4 will be assigned identical reference numerals and description thereof will be omitted. Note that although first to fourth pieces of movement trail data 501 to 504 shown in FIG 3 are also illustrated together for convenience of description, these pieces of data do not necessarily make up the diagram.

Point-sectioning section 330a divides the above-described route, for example, into a section from the departure point to point A (hereinafter referred to as "first section") 541, a section from point A to point B (hereinafter referred to as "second section") 542, a section from point B to point C (hereinafter referred to as "third section") 543, and a section from point C to the destination (hereinafter referred to as "fourth section") 544.

In this case, it is apparent from first to fourth pieces of movement trail data 501 to 504 shown in FIG. 6 that the passing time indicated by fourth piece of movement trail data 504 is the latest at each point of the last half of second section 542, for example. However, an average time of third piece of movement trail data 503 is later than an average time of fourth piece of movement trail data 504 in second section 542 as a whole. This is because regarding fourth piece of movement trail data 504, the vehicle stopped (for break) at point D for a very long time.

In this case, as shown in FIG. 6, latest passing time line 532 in second section 542 of diagram 520 matches third piece of movement trail data 503 whose average time is late. Latest passing time line 532 determined in this way is different from latest passing time line 532 shown in FIG. 4. More specifically, latest passing time line 532 is displayed, which further reduces the risk of preventing arrival at the target arrival time zone in time.

Such diagram 520 can also provide information useful for dynamic management of a moving mobile subject under the reduced influence of the movement trail data indicating a traveling state which is hard to reproduce.

Note that movement trail processing section 300a may also determine which piece of movement trail data should be earliest passing time line 531 and latest passing time line 532 based on an average time of the whole route.

Movement trail processing section 300a may also determine which piece of movement trail data should be designated as earliest passing time line 531 and latest passing time line 532 for each section using a different evaluation function other than the average time.

Moreover, information providing apparatus 100a may determine earliest passing time line 531 and latest passing time line 532 of each section using pieces of movement trail data about part of the whole route.

Suppose that there is a piece of movement trail data only made up of data of fourth section 544, for example. In this case, when a search condition for the section is satisfied, movement trail processing section 300a extracts the piece of movement trail data as partial data. Movement trail processing section 300a determines earliest passing time line 531 and latest passing time line 532 for fourth section 544 using this piece of movement trail data as partial data.

Note that use of such a piece movement trail data as partial data is also applicable to information providing apparatus 100 described in FIG 1 to FIG. 4.

### <Embodiment 2>

Embodiment 2 of the present invention is an example of a specific mode of the present invention applied to a system that presents information to an administrator of a management center of distribution vehicles.

### (Configuration and Operation of Embodiment 2)

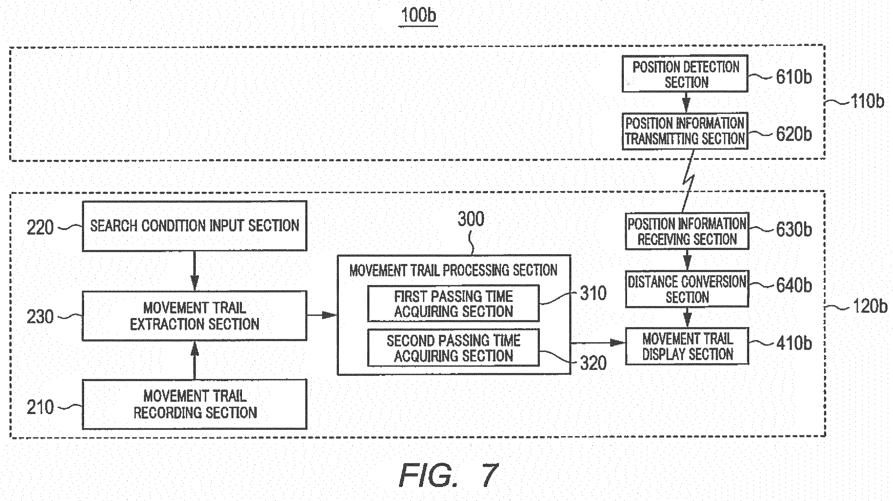

FIG. 7 is a block diagram illustrating an exemplary configuration of an information providing system according to the present embodiment, which corresponds to FIG. 1 of Embodiment 1. Components identical to those in FIG. 1 will be assigned identical reference numerals and description thereof will be omitted. The operation of the information providing system according to the present embodiment is similar to the operation of information providing apparatus 100 according to Embodiment 1 except for the contents of processing of calculating an earliest passing time line and a latest passing time line and insertion of a transmission and/or reception process. Illustration and description of components similar to those of Embodiment 1 will be omitted.

In FIG. 7, information providing system 100b includes client apparatus 110b and server apparatus 120b. Client apparatus 110b is a smartphone carried by a driver of a distribution vehicle, for example. Server apparatus 120b is an information terminal installed in a management center of distribution vehicles, for example. That is, client apparatus 110b and server apparatus 120b are implemented by a CPU executing a control program, for example. A user of server apparatus 120b is an administrator who manages operations of distribution vehicles at the management center.

Client apparatus 110b includes position detection section 610b and position information transmitting section 620b.

Position detection section 610b acquires a time at which an actual vehicle (actual mobile subject) which is a vehicle (mobile subject) traveling (moving) to a destination passed through a transit point (hereinafter referred to as "actual passing time"). More specifically, position detection section 610b receives, for example, a GPS (global positioning system) signal, and periodically (e.g., every 10 seconds) detects the position of the actual vehicle based on the received GPS signal. Position detection section 610b associates the detection time with the actual vehicle position and outputs the actual vehicle position information to position information transmitting section 620b. Here, the actual vehicle position is the detected position of the actual vehicle. The detection time refers to the time at which the position is detected. The actual vehicle position information refers to a set of the acquired actual vehicle position and the detection time.

Note that the actual vehicle position does not always match a predetermined transit point. However, as will be described later, it is possible to acquire the actual passing time from the actual vehicle position information through interpolation processing or the like.

Position information transmitting section 620b transmits the inputted actual vehicle position information to server apparatus 120b through a radio communication circuit and an antenna (not shown) or the like.

Server apparatus 120b includes position information receiving section 630b and distance conversion section 640b in addition to the configuration of information providing apparatus 100 shown in FIG. 1. Server apparatus 120b also includes movement trail display section 410b which is different from movement trail display section 410 in FIG. 1.

Position information receiving section 630b receives the actual vehicle position information transmitted from client apparatus 110b through a radio communication circuit and an antenna (not shown) or the like. Position information receiving section 630b then outputs the received actual vehicle position information to distance conversion section 640b.

Distance conversion section 640b converts the inputted actual vehicle position information to a traveling distance from the departure point or a remaining distance to the destination. Distance conversion section 640b outputs the traveling distance or the remaining distance obtained by the conversion to movement trail display section 410b.

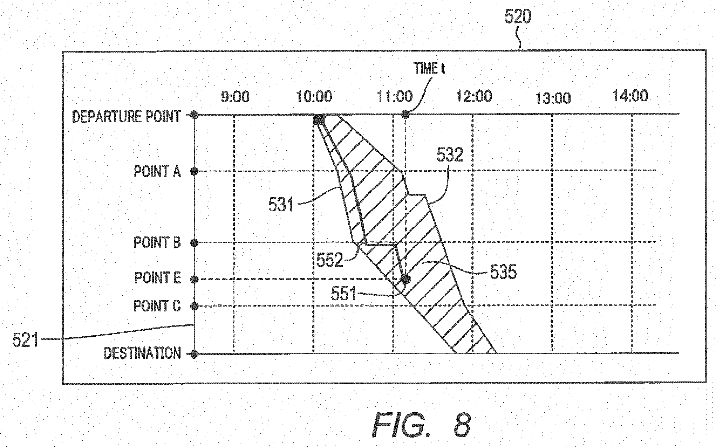

Movement trail display section 410b generates and displays a diagram showing points of intersection between transit points and actual passing times as in the case of diagram 520 of Embodiment 1 (see FIG. 4). In this case, movement trail display section 410b uses the inputted traveling distance or remaining distance to show the current position of the actual vehicle (point E in FIG. 8) which is one of transit points in diagram 520 (see FIG. 4).

FIG 8 is a diagram illustrating an example of the diagram displayed by movement trail display section 410b, which corresponds to FIG. 4. Components identical to those in FIG 4 will be assigned identical reference numerals and description thereof will be omitted.

As shown in FIG. 8, diagram 520 displays marker 551 superimposed on movement trail data region 535. Marker 551 is displayed at a point of intersection between point E which is the current position of the actual vehicle and time t which is the current time.

For example, the fact that marker 551 is on the left side of movement trail data region 535 indicates that the vehicle is in a temporally early state, that is, there is sufficient time allowance. In contrast, the fact that marker 551 is on the right side of movement trail data region 535 indicates that the vehicle is in a temporally late state, that is, there is not much time allowance. It is apparent from the example shown in FIG. 8 that there is a time allowance of approximately 40 minutes at the current point.

By looking at such diagram 520, the user of server apparatus 120b (administrator of the management center) can intuitively determine whether the actual vehicle can arrive at the target arrival time zone in time.

Note that as shown in FIG. 8, diagram 520 may also display line segment 552 connecting a point of intersection between the departure point and the actual departure time of the actual mobile subject and points of intersection between transit points and actual passing times together. This line segment 552 is namely actual movement data indicating a movement trail (movement track) of the actual vehicle up to the present. This line 552 can be drawn by connecting actual vehicle position information group (position data) about a series of a plurality of detection times, for example.

By looking at such diagram 520, the user of server apparatus 120b can intuitively figure out the operation situation of the actual vehicle.

### (Effects of Embodiment 2)

In this way, information providing system 100b according to the present embodiment further shows points of intersection between transit points and actual passing times in a diagram. It is thereby possible to provide information useful for operation management of the actual traveling vehicle to a user other than the driver of the vehicle.

### <Embodiment 3>

Embodiment 3 of the present invention is an example of a specific mode of the present invention when a client apparatus side inputs a search condition and displays a diagram, and a server apparatus side performs various kinds of processing to generate the diagram.

### (Configuration and Operation of Embodiment 3)

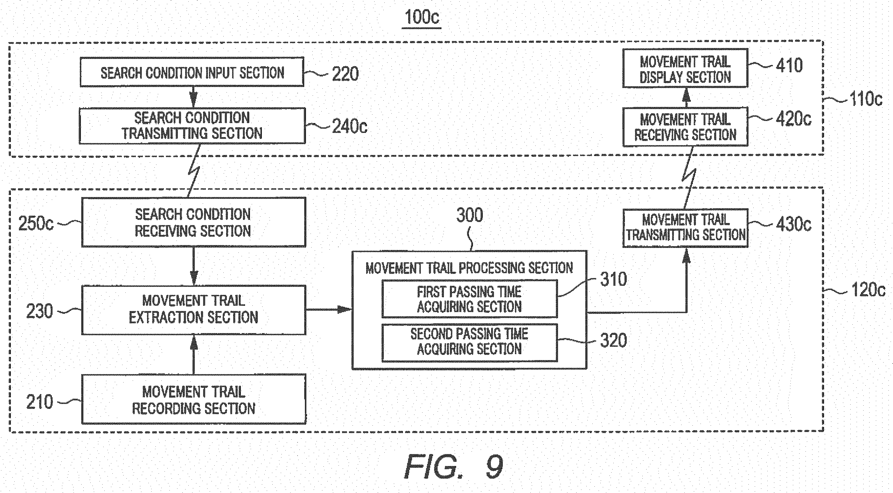

FIG. 9 is a block diagram illustrating an exemplary configuration of an information providing system according to Embodiment 3, which corresponds to FIG. 1 of Embodiment 1. Components identical to those in FIG. 1 will be assigned identical reference numerals and description thereof will be omitted. The operation of the information providing system according to the present embodiment is similar to the operation of information providing apparatus 100 according to Embodiment 1 except in that a transmission and/or reception process is inserted. Illustration and description of components similar to those of Embodiment 1 will be omitted.

In FIG. 9, information providing system 100c includes client apparatus 110c and server apparatus 120c. Client apparatus 110c is, for example, an ECU mounted on a vehicle. Server apparatus 120c is, for example, an information processing server of an information providing service disposed on the Internet. That is, client apparatus 110c and server apparatus 120c are implemented by the CPU executing a control program.

Client apparatus 110c includes search condition input section 220, search condition transmitting section 240c, movement trail receiving section 420c, and movement trail display section 410.

Search condition transmitting section 240c transmits a search condition inputted from search condition input section 220 to server apparatus 120c via a radio communication circuit and an antenna (not shown) or the like.

Movement trail receiving section 420c receives movement trail information, which will be described later, and is transmitted from server apparatus 120c, and outputs the received movement trail information to movement trail display section 410.

Server apparatus 120c includes movement trail recording section 210, search condition receiving section 250c, movement trail extraction section 230, movement trail processing section 300, and movement trail transmitting section 430c.

Search condition receiving section 250c receives a search condition transmitted from client apparatus 110c and outputs the received search condition to movement trail extraction section 230.

Movement trail transmitting section 430c acquires information necessary to display diagram 520 (see FIG. 4) (hereinafter referred to as "movement trail information") described in Embodiment 1 from movement trail processing section 300. Movement trail transmitting section 430c then transmits the acquired movement trail information to client apparatus 110c via a radio communication circuit and an antenna (not shown) or the like.

### (Effects of Embodiment 3)

Thus, information providing system 100c according to the present embodiment disposes sections for inputting a search condition and displaying a diagram on client apparatus 110c, and disposes other sections of the apparatus on server apparatus 120c. This allows processing loads to be distributed. That is, it is possible to provide information useful for operation management of the actual traveling vehicle to the driver of the vehicle while keeping the configuration for the apparatus mounted on the vehicle (client apparatus 110c) simple.

### (Variations of Embodiment 3)

Note that the search condition inputted by search condition input section 220 may be an external environment condition that may be temporally variable such as a weather condition or a traffic situation. In this case, information providing system 100c preferably searches for a piece of movement trail data every time the search condition changes and updates a diagram to be displayed based on the found piece of movement trail data.

That is, when a new search condition is inputted, movement trail extraction section 230 extracts a piece of movement trail data that satisfies the search condition again. When the piece of movement trail data is extracted again, movement trail processing section 300 acquires passing times or the like again based on the piece of movement trail data. Furthermore, when passing times or the like are acquired again, movement trail display section 410 displays the diagram again based on movement trail information including the passing times or the like. That is, movement trail display section 410 deletes the displayed movement trail data region and draws a new movement trail data region.

For example, a weather condition or traffic situation may change, such as when it starts snowing or traffic congestion occurs, while the actual vehicle is traveling. Information providing system 100c according to the present embodiment can change contents of the diagram to be displayed based on change factors, including such external environment factors.

Note that information providing system 100c may include an external environment condition receiving section that receives sensor information indicating an external situation from a sensor or the like provided outside. Such sensor information is, for example, temperature information acquired by a temperature sensor installed on the road side, weather information observed by a camera installed to know a traffic environment or congestion information such as a vehicle information and communication system (VICS) (registered trademark).

When a plurality of pieces of sensor information are sent, movement trail extraction section 230 may automatically generate a search condition from the sensor information using a table stored in advance that associates the sensor information with the search condition. For example, movement trail extraction section 230 generates conditions like: "it is snowing" or "the road is frozen," as a search condition from temperature information and weather information of the region in which the vehicle is currently traveling.

When the weather condition and traffic situation can be acquired in real time in this way, information providing system 100c can display a diagram based on movement trail data that matches the current traveling situation better and provide information more based on reality to the user.

### <Other Embodiments>

Aspects of the present invention are not limited to the aspects described in aforementioned Embodiment 1 to Embodiment 3.

For example, search condition input section 220 may be disposed in client apparatus 110b in the configuration of Embodiment 2 shown in FIG 7. The whole configuration of Embodiment 2 shown in FIG. 7 may also be disposed in client apparatus 110b. One of search condition input section 220 and movement trail display section 410 may be disposed in server apparatus 120c in the configuration of Embodiment 3 shown in FIG. 9.

The diagram may show only the earliest passing time line or only the latest passing time line. The diagram may show only the current position of the actual vehicle and periphery thereof. The orientation of each axis of the diagram is not limited to the details described in Embodiment 1 to Embodiment 3.

When there is only one piece of movement trail data that satisfies the search condition, the information providing apparatus may display only the movement trail data in the diagram or display a region obtained by adding a predetermined time width to the movement trail data as a movement trail data region. In this case, it is preferable to add the time width to the side with earlier times.

The mobile subjects to which the present invention are applied is not limited to the mobile subjects described in Embodiment 1 to Embodiment 3, and may include, for example, a human being, bus, train, ship and aircraft. However, the more pieces of movement trail data that match each other in the departure point, transit point, destination, and moving time zone are obtained, the more useful information can be provided. Therefore, the present invention is suitable for such mobile subjects that move in a specific section at almost the same time. Note that, general vehicles that travel on private business may also travel according to route search results of a navigation system or the like, thereby, traveling along a route selected from among a plurality of specific routes. Therefore, the present invention is also suitable for such vehicles.

An information providing apparatus of the present disclosure includes: a movement trail processing section that acquires a passing time from a piece of movement trail data of a reference mobile subject which is a mobile subject that arrives at a predetermined destination at a predetermined time without delay, the passing time being a time at which the reference mobile subject passes through a predetermined transit point; and a movement trail display section that displays a diagram showing a point of intersection between the transit point and the passing time in a two-dimensional space having a time axis and a spatial axis as axes of the diagram.

In the information providing apparatus, the diagram may indicate a line segment connecting: a point of intersection between a departure point of the reference mobile subject and a departure time that is a time at which the reference mobile subject leaves the departure point; a point of intersection between the transit point and the passing time; and a point of intersection between the destination and an arrival time that is a time at which the reference mobile subject arrives at the destination.

In the information providing apparatus, the diagram may include information indicating the departure time, the passing time and the arrival time along the time axis, and information indicating the departure point, the transit point and the destination along the spatial axis.

In the information providing apparatus, the movement trail processing section may use a piece of movement trail data that satisfies a condition that the departure time is included in a first time zone and the arrival time is included in a second time zone.

In the information providing apparatus, the movement trail processing section may include: a first passing time acquiring section that acquires, when there are a plurality of pieces of movement trail data that satisfy the condition, a first departure time, a first passing time, and a first arrival time, the first departure time being included in a time zone in which the departure times in the plurality of pieces of movement trail data are distributed, the first passing time being included in a time zone in which the passing times in the plurality of pieces of movement trail data are distributed, and the first arrival time being included in a time zone in which the arrival times in the plurality of pieces of movement trail data are distributed; and a second passing time acquiring section that acquires, when there are a plurality of pieces of movement trail data that satisfy the condition, a second departure time, a second passing time, and a second arrival time, the second departure time being included in a time zone in which the departure times in the plurality of pieces of movement trail data are distributed and being a time later than the first departure time, the second passing time being included in a time zone in which the passing times in the plurality of pieces of movement trail data are distributed and being a time later than the first passing time, and the second arrival time being included in a time zone in which the arrival times in the plurality of pieces of movement trail data are distributed and being a time later than the first arrival time, and the diagram may indicate: a first line segment connecting a point of intersection between the departure point and the first departure time, a point of intersection between the transit point and the first passing time and a point of intersection between the destination and the first departure time; and a second line segment connecting a point of intersection between the departure point and the second departure time, a point of intersection between the transit point and the second passing time and a point of intersection between the destination and the second departure time.

In the information providing apparatus, the first departure time, the first passing time, and the first arrival time may be the earliest times at which the reference mobile subject is positioned at points respectively corresponding to the first departure, passing and arrival times, and the second departure time, the second passing time, and the second arrival time may be the latest times at which the reference mobile subject is positioned at points respectively corresponding to the second departure, passing and arrival times.

The information providing apparatus may further include a point-sectioning section that sections, when there are a plurality of pieces of movement trail data that satisfy the condition, each of the pieces of the movement trail data into pieces of divided trail data according to a plurality of sections resulting from sectioning a route extending from the departure point to the destination via the transit point, in which the first line segment may be a line segment connecting, over the whole route, the piece of divided trail data whose average time is the earliest in the corresponding section, the average time being an average of times at which the reference mobile subject is positioned, and the second line segment may be a line segment connecting, over the whole route, the piece of divided trail data whose average time is the latest in the corresponding section, the average time being an average of times at which the reference mobile subject is positioned.

The information providing apparatus may further include a search condition input section that inputs a condition of the piece of movement trail data to be used by the movement trail processing section.

The information providing apparatus may further include: a movement trail recording section that stores a plurality of pieces of the movement trail data; and a movement trail extraction section that extracts, from the movement trail recording section, one or a plurality of pieces of the movement trail data that satisfy the condition inputted by the search condition input section, in which the movement trail extraction section may extract again, when a new condition is inputted, one or a plurality of pieces of movement trail data that satisfy the condition, the movement trail processing section may acquire again, when one or a plurality of pieces of the movement trail data is extracted again, the passing time based on the piece of movement trail data, and the movement trail display section may display again the diagram based on the passing time, when the passing time is acquired again.

In the information providing apparatus, the transit point may include a first transit point and a second transit point, the first line segment may be a line segment connecting the point of intersection between the first transit point and the first passing time corresponding to the first transit point, and the point of intersection between the second transit point and the first passing time corresponding to the second transit point, and the second line segment may be a line segment connecting the point of intersection between the first transit point and the second passing time corresponding to the first transit point, and the point of intersection between the second transit point and the second passing time corresponding to the second transit point.

The information providing apparatus may further include a position detection section that detects a position of an actual mobile subject and thereby acquires at least an actual passing time, the actual mobile subject being a mobile subject moving to the destination, and the actual passing time being a time at which the actual mobile subject passes through the transit point, in which the diagram may indicate a point of intersection between the transit point and the actual passing time.

The information providing apparatus may further include a position detection section that acquires an actual passing time that is a time at which an actual mobile subject passes through the transit point, the actual mobile subject being a mobile subject moving to the destination, in which the diagram may indicate a line segment connecting: a point of intersection between the departure point and an actual departure time that is a time at which the actual mobile subject leaves the departure point; and a point of intersection between the transit point and the actual passing time.

An information providing method of the present disclosure includes: acquiring a passing time from a piece of movement trail data of a reference mobile subject which is a mobile subject that arrives at a predetermined destination at a predetermined time without delay, the passing time being a time at which the reference mobile subject passes through a predetermined transit point; and displaying a diagram indicating a point of intersection between the transit point and the passing time in a two-dimensional space having a time axis and a spatial axis as axes of the diagram.

An information providing program of the present disclosure is a program for causing a computer to execute processing including: acquiring a passing time from a piece of movement trail data of a reference mobile subject which is a mobile subject that arrives at a predetermined destination at a predetermined time without delay, the passing time being a time at which the reference mobile subject passes through a predetermined transit point; and displaying a diagram indicating a point of intersection between the transit point and the passing time in a two-dimensional space having a time axis and a spatial axis as axes of the diagram.

The disclosure of Japanese Patent Application No. 2013-095628, filled on April 30, 2013, including the specification, abstract, and drawings, is included herein by reference in its entirety.

### Industrial Applicability

The present invention is useful as an information providing apparatus, an information providing method, and an information providing program capable of providing information useful for dynamic management of moving mobile subjects.

### Reference Signs List

100, 100a Information providing apparatus
100b, 100c Information providing system
110b, 110c Client apparatus
120b, 120c Server apparatus
210 Movement trail recording section
220 Search condition input section
230 Movement trail extraction section
240c Search condition transmitting section
300, 300a Movement trail processing section
310, 310a First passing time acquiring section
320, 320a Second passing time acquiring section
330a Point-sectioning section
410, 410b Movement trail display section
420c Movement trail receiving section
610b Position detection section
620b Position information transmitting section
630b Position information receiving section
640b Distance conversion section

## Claims

1. An information providing apparatus comprising:
a movement trail processing section that acquires a passing time from a piece of movement trail data of a reference mobile subject which is a mobile subject that arrives at a predetermined destination at a predetermined time without delay, the passing time being a time at which the reference mobile subject passes through a predetermined transit point; and
a movement trail display section that displays a diagram showing a point of intersection between the transit point and the passing time in a two-dimensional space having a time axis and a spatial axis as axes of the diagram.

2. The information providing apparatus according to claim 1, wherein the diagram indicates a line segment connecting: a point of intersection between a departure point of the reference mobile subject and a departure time that is a time at which the reference mobile subject leaves the departure point; a point of intersection between the transit point and the passing time; and a point of intersection between the destination and an arrival time that is a time at which the reference mobile subject arrives at the destination.

3. The information providing apparatus according to claim 2, wherein the diagram includes information indicating the departure time, the passing time and the arrival time along the time axis, and information indicating the departure point, the transit point and the destination along the spatial axis.

4. The information providing apparatus according to claim 3, wherein the movement trail processing section uses a piece of movement trail data that satisfies a condition that the departure time is included in a first time zone and the arrival time is included in a second time zone.

5. The information providing apparatus according to claim 4, wherein
the movement trail processing section includes:
a first passing time acquiring section that acquires, when there are a plurality of pieces of movement trail data that satisfy the condition, a first departure time, a first passing time, and a first arrival time, the first departure time being included in a time zone in which the departure times in the plurality of pieces of movement trail data are distributed, the first passing time being included in a time zone in which the passing times in the plurality of pieces of movement trail data are distributed, and the first arrival time being included in a time zone in which the arrival times in the plurality of pieces of movement trail data are distributed; and
a second passing time acquiring section that acquires, when there are a plurality of pieces of movement trail data that satisfy the condition, a second departure time, a second passing time, and a second arrival time, the second departure time being included in a time zone in which the departure times in the plurality of pieces of movement trail data are distributed and being a time later than the first departure time, the second passing time being included in a time zone in which the passing times in the plurality of pieces of movement trail data are distributed and being a time later than the first passing time, and the second arrival time being included in a time zone in which the arrival times in the plurality of pieces of movement trail data are distributed and being a time later than the first arrival time, and
the diagram indicates: a first line segment connecting a point of intersection between the departure point and the first departure time, a point of intersection between the transit point and the first passing time and a point of intersection between the destination and the first departure time; and
a second line segment connecting a point of intersection between the departure point and the second departure time, a point of intersection between the transit point and the second passing time and a point of intersection between the destination and the second departure time.

6. The information providing apparatus according to claim 5, wherein the first departure time, the first passing time, and the first arrival time are the earliest times at which the reference mobile subject is positioned at points respectively corresponding to the first departure, passing and arrival times, and the second departure time, the second passing time, and the second arrival time are the latest times at which the reference mobile subject is positioned at points respectively corresponding to the second departure, passing and arrival times.

7. The information providing apparatus according to claim 5, further comprising a point-sectioning section that sections, when there are a plurality of pieces of movement trail data that satisfy the condition, each of the pieces of the movement trail data into pieces of divided trail data according to a plurality of sections resulting from sectioning a route extending from the departure point to the destination via the transit point, wherein
the first line segment is a line segment connecting, over the whole route, the piece of divided trail data whose average time is the earliest in the corresponding section, the average time being an average of times at which the reference mobile subject is positioned, and
the second line segment is a line segment connecting, over the whole route, the piece of divided trail data whose average time is the latest in the corresponding section, the average time being an average of times at which the reference mobile subject is positioned.

8. The information providing apparatus according to claim 1, further comprising a search condition input section that inputs a condition of the piece of movement trail data to be used by the movement trail processing section.

9. The information providing apparatus according to claim 8, further comprising:
a movement trail recording section that stores a plurality of pieces of the movement trail data; and
a movement trail extraction section that extracts, from the movement trail recording section, one or a plurality of pieces of the movement trail data that satisfy the condition inputted by the search condition input section, wherein
the movement trail extraction section extracts again, when a new condition is inputted, one or a plurality of pieces of movement trail data that satisfy the condition,
the movement trail processing section acquires again, when one or a plurality of pieces of the movement trail data is extracted again, the passing time based on the piece of movement trail data, and
the movement trail display section displays again the diagram based on the passing time, when the passing time is acquired again.

10. The information providing apparatus according to claim 5, wherein
the transit point includes a first transit point and a second transit point,
the first line segment is a line segment connecting the point of intersection between the first transit point and the first passing time corresponding to the first transit point, and the point of intersection between the second transit point and the first passing time corresponding to the second transit point, and
the second line segment is a line segment connecting the point of intersection between the first transit point and the second passing time corresponding to the first transit point, and the point of intersection between the second transit point and the second passing time corresponding to the second transit point.

11. The information providing apparatus according to claim 1, further comprising a position detection section that detects a position of an actual mobile subject and thereby acquires at least an actual passing time, the actual mobile subject being a mobile subject moving to the destination, and the actual passing time being a time at which the actual mobile subject passes through the transit point, wherein
the diagram indicates a point of intersection between the transit point and the actual passing time.

12. The information providing apparatus according to claim 2, further comprising a position detection section that acquires an actual passing time that is a time at which an actual mobile subject passes through the transit point, the actual mobile subject being a mobile subject moving to the destination, wherein
the diagram indicates a line segment connecting: a point of intersection between the departure point and an actual departure time that is a time at which the actual mobile subject leaves the departure point; and a point of intersection between the transit point and the actual passing time.

13. An information providing method comprising:
acquiring a passing time from a piece of movement trail data of a reference mobile subject which is a mobile subject that arrives at a predetermined destination at a predetermined time without delay, the passing time being a time at which the reference mobile subject passes through a predetermined transit point; and
displaying a diagram indicating a point of intersection between the transit point and the passing time in a two-dimensional space having a time axis and a spatial axis as axes of the diagram.

14. An information providing program for causing a computer to execute processing comprising:
acquiring a passing time from a piece of movement trail data of a reference mobile subject which is a mobile subject that arrives at a predetermined destination at a predetermined time without delay, the passing time being a time at which the reference mobile subject passes through a predetermined transit point; and
displaying a diagram indicating a point of intersection between the transit point and the passing time in a two-dimensional space having a time axis and a spatial axis as axes of the diagram.
